# FASCICULE DE BREVET EUROPEEN

(11) **EP 3 314 598 B1**
(45) Date de publication et mention de la délivrance du brevet: **10.04.2019**
(21) Numéro de dépôt: 16733429.1
(22) Date de dépôt: 24.06.2016
(51) Int. Cl.: G08C 19/02, G06K 19/07, H04Q 9/00

(54) **DISPOSITIF RFID DE DÉTERMINATION DE L'ÉTAT DE FONCTIONNEMENT ET D'IDENTIFICATION D'UN APPAREIL ÉLECTRIQUE**
RFID-VORRICHTUNG ZUR BESTIMMUNG DES BETRIEBSZUSTANDS UND ZUR IDENTIFIZIERUNG EINES ELEKTRISCHEN GERÄTS
RFID DEVICE FOR DETERMINING THE OPERATING STATUS AND IDENTIFYING AN ELECTRIC APPLIANCE

(30) Priorité: 26.06.2015 FR 1555947
(43) Date de publication de la demande: 02.05.2018
(73) Titulaire: Centre National de la Recherche Scientifique, 75016 Paris (FR); Universite De Nice-Sophia Antipolis, 06103 Nice Cedex (FR)
(72) Inventeur: STARAJ, Robert, 06570 Saint-paul (FR); RIBERO, Jean-Marc, 06100 Nice (FR); COSKER, Mathieu, 29200 Brest (FR)
(74) Mandataire: Lopez, Frédérique
(86) Numéro de dépôt international: PCT/EP2016/064734
(87) Numéro de publication internationale: WO 2016/207389

(56) Documents cités:
- EP-A1- 1 857 302
- EP-A1- 2 796 834

## Description

### Domaine de l'invention

L'invention se situe dans le domaine des systèmes RFID, et en particulier l'utilisation de tels systèmes pour déterminer l'état de fonctionnement d'un appareil électrique et pour identifier ledit appareil.

### Etat de la Technique

Les dispositifs RFID sont de nos jours massivement utilisés pour faire de l'identification. Le principe de fonctionnement d'un système RFID consiste en général en ce qu'une étiquette couplée et adaptée à une antenne, est apposée sur un objet, un animal ou un homme, pour lui attribuer un identifiant unique. En plus de l'identification d'appareils électriques, il est apparu le besoin de faire un suivi du fonctionnement de tels appareils que ce soit pour extraire des informations de consommation électrique ou de maintenance par exemple. Il existe des solutions à ce besoin, cependant elles sont en général dissociées des systèmes d'identification.

La demande de brevet EP2796834A1 de Thomson Licensing, présente un système d'identification RFID pour détecter l'activité d'appareils électriques domestiques. Le système est constitué de tags RFID passifs attachés à chaque cordon d'alimentation électrique de chaque appareil, et de moyens pour détecter un changement dans la consommation électrique des appareils. Quand un changement est détecté, un lecteur RFID peut alors lire les données des tags RFID. Cette solution se base sur la détection de pics de courant sur le cordon d'alimentation d'un appareil électrique, provoqués par un changement d'état de l'appareil, lors de son allumage et de son extinction. L'impulsion de courant détectée active le tag RFID placé sur le cordon électrique pour écrire un bit à 0 ou à 1 dans une mémoire du circuit intégré selon le statut de l'appareil. Par corrélation avec une différence de consommation totale mesurée sur le compteur électrique de l'habitation, et en interrogeant l'ensemble des tags RFID, il est possible de déterminer quel appareil vient de s'allumer ou de s'éteindre. Ainsi, ce type d'approche nécessite d'utiliser des tags RFID de type lecture/écriture, et requière de récupérer des données au niveau d'un compteur d'un compteur général.

Il existe le besoin d'une solution qui pallie aux inconvénients des approches connues. La présente invention répond à ce besoin.

### Résumé de l'invention

Un objet de la présente invention est de proposer une solution intégrée de détection de l'état de fonctionnement d'un appareil électrique et d'identification de cet appareil.

Le principe général de la solution est d'avoir un boitier intercalé entre une prise électrique et un appareil électrique à surveiller. Le boitier comprend un circuit qui permet de détecter le passage d'un courant électrique et ensuite induire une tension suffisante aux bornes d'une bobine pour faire commuter une diode. Cette diode change l'état de résonance de l'antenne d'un tag RFID placé dans le boitier. Un appareil électrique qui est en fonctionnement apparait dans le champ de lecture d'un lecteur RFID.

Avantageusement, le système de l'invention fonctionne avec des tags RFID basiques stockant un identifiant, et ne requière pas de récupérer des données sur un compteur général.

Avantageusement, le dispositif proposé est limité en termes de composants électroniques offrant ainsi un coût de fabrication réduit.

Dans un mode de réalisation préférentiel, un dispositif de détermination de l'état de fonctionnement d'un appareil électrique et d'identification dudit appareil, comprend :
- un détecteur de courant couplé à un câble d'alimentation de l'appareil électrique pour détecter le passage d'un courant dans ledit câble et générer un signal électrique ;
- un générateur de tension pour convertir le signal électrique en sortie du détecteur de courant en une tension continue ;
- un circuit RFID permettant de stocker des informations d'identification, couplé à une antenne adaptée pour recevoir de et émettre vers un lecteur RFID des signaux;
le dispositif étant caractérisé en ce qu'il comprend un circuit de contrôle couplé au générateur de tension et au circuit RFID, ledit circuit de contrôle comprenant des moyens pour produire un changement d'impédance de l'antenne quand la tension continue est appliquée, le changement d'impédance permettant d'émettre les informations d'identification vers le lecteur RFID.

Avantageusement, le changement d'impédance de l'antenne permet d'amener la fréquence de l'antenne à la fréquence de résonance du lecteur RFID. Dans une implémentation préférentielle, la fréquence du lecteur RFID est une fréquence de la bande UHF à 868 MHz. Dans une variante de réalisation, l'antenne est une antenne de type dipôle. Les informations d'identification sont un identifiant du code d'identification du tag RFID lié au système.

Dans une implémentation, le détecteur de courant comprend un transformateur couplé par induction au câble d'alimentation.

Dans un mode réalisation, le générateur de tension est un circuit de type doubleur de Schenkel.

Dans une variante d'implémentation, le circuit de contrôle comprend au moins une diode PIN.

L'invention concerne aussi un procédé pour déterminer l'état de fonctionnement d'un appareil électrique et identifier ledit appareil, le procédé comprenant les étapes de :
- détecter le passage d'un courant électrique dans le câble d'alimentation de l'appareil électrique ;
- générer une tension continue représentative du courant électrique ;
- appliquer la tension continue aux bornes d'un dispositif de contrôle, le dispositif de contrôle étant couplé à un circuit RFID permettant de stocker des informations d'identification et étant couplé à une antenne adaptée pour recevoir de et émettre vers un lecteur RFID des signaux, ledit circuit de contrôle permettant de produire un changement d'impédance de l'antenne quand la tension continue est appliquée, le changement d'impédance permettant d'émettre les informations d'identification vers le lecteur RFID.

### Description des figures

Différents aspects et avantages de l'invention vont apparaitre en appui de la description d'un mode préféré d'implémentation de l'invention mais non limitatif, avec référence aux figures ci-dessous :
La figure 1 illustre une représentation générale du dispositif de l'invention ;
La figure 2 est un schéma des blocs fonctionnels du dispositif de l'invention.
La figure 3 montre une implémentation possible du dispositif de l'invention.

### Description détaillée de l'invention

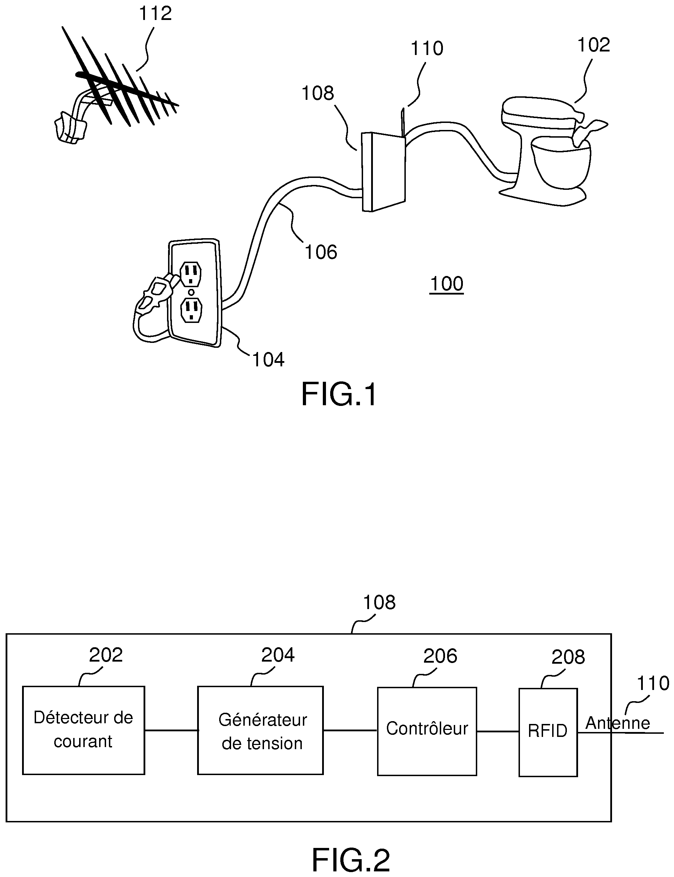

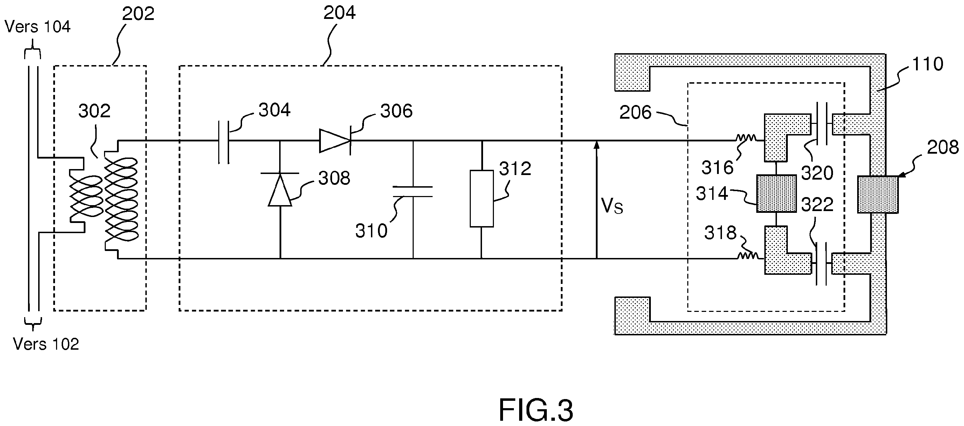

Tel qu'illustré sur la figure 1, le dispositif de l'invention est généralement utilisé dans un environnement 100 d'appareils électriques 102 reliés à des alimentations électriques 104, de type prises murales par exemple, par un câble d'alimentation 106. De manière avantageuse, le dispositif de l'invention est intégré dans un boitier de petite taille 108 couplé au câble d'alimentation de l'appareil électrique. Il comprend un circuit électronique RFID avec une antenne 110 et un système de contrôle électronique. Le système de contrôle est basse consommation, alimenté et commandé par une bobine, tel que cela est détaillé en référence à la figure 3. Le boitier est de manière préférentielle en matériau non métallique pour assurer une isolation électrique de l'usager et permettre une bonne propagation des ondes électromagnétiques. Le circuit électronique ou étiquette ou tag RFID, attribue un identifiant unique à l'appareil électrique. Le tag RFID est de type passif, sans alimentation autonome et utilise pour son activation le courant électrique circulant dans le câble d'alimentation de l'appareil électrique branché sur le secteur.

Un lecteur RFID 112 permet l'identification des objets présents dans son espace de détection. Le lecteur, aussi appelé interrogateur, est un dispositif actif capable d'identifier une ou plusieurs étiquettes situées dans sa zone de couverture, grâce à l'envoi d'une onde électromagnétique via sa propre antenne. Cette onde a une fréquence qui est en général définie par un standard RFI (par exemple 868 MHz en Europe) et elle contient un message d'interrogation vers les étiquettes. Pour que la communication s'établisse, l'antenne du lecteur doit fonctionner à la même fréquence que l'antenne de l'étiquette. A la différence des objets identifiés traditionnellement par les systèmes RFID, l'identification effectuée selon le principe de l'invention, n'a lieu que si un courant d'alimentation parcours le câble d'alimentation de l'appareil, sur l'une des phases du câble.

En l'absence de courant d'alimentation dans le câble, l'antenne du dispositif 108 ne fonctionne pas sur la bonne fréquence du standard utilisé par le circuit RFID. Le système antennaire est désadapté, et il ne répond pas au signal interrogateur permanent provenant du lecteur RFID 112.

Le courant d'alimentation de l'appareil qui est détecté sert à alimenter une ou plusieurs diodes du circuit de contrôle du dispositif 108, qui vont mettre l'antenne 110 sur la bonne fréquence de résonance dans le standard considéré en rallongeant sa longueur électrique.

Quand l'antenne est réactivée à la bonne fréquence de fonctionnement, elle peut capter le champ électromagnétique venant du lecteur RFID 112 dans lequel elle baigne en permanence, et ainsi alimenter la puce RFID du dispositif 108.

Le courant d'alimentation qui est détecté est converti en un signal qui est envoyé à la puce RFID. Il est de puissance suffisante pour que la puce en extrait une énergie de fonctionnement, l'horloge et le message d'interrogation du lecteur. A l'aide de l'énergie récupérée, la puce fabrique son message de réponse, constitué principalement de l'identifiant. Elle le transmet à l'antenne 110 du dispositif, déjà utilisée en réception, qui va ensuite répondre au lecteur RFID 112, en lui renvoyant l'identifiant assigné à l'appareil électrique. L'apparition de l'identifiant, dans le champ de détection du lecteur RFID 112 permet à un logiciel de supervision associé au lecteur RFID d'indiquer que l'appareil identifié est allumé.

Ainsi, le principe général de la présente invention est celui d'une activation conditionnelle d'un système de lecture RFID, la condition étant la détection d'un courant passant dans le câble d'alimentation d'un appareil électrique, qui permet de ne rendre visible et identifiable le tag RFID qu'en présence de ce courant.

L'apparition de l'identifiant lié à cet appareil dans les registres d'un ordinateur de supervision permet de détecter la mise en route de cet appareil spécifique, et d'exploiter ensuite cette information de manières diverses.

La figure 2 montre les blocs fonctionnels du dispositif 108 de l'invention qui comprend un détecteur de courant 202, un générateur de tension continue 204, un circuit de contrôle 206, un circuit RFID 208 et une antenne 110 associée.

Le circuit RFID 208 est basé sur un circuit RFID passif basique qui a un circuit électronique intégré ou une puce pour stocker des informations d'identification de type identifiant unique. Cet identifiant est assigné à l'appareil électrique utilisant le câble d'alimentation sur lequel le dispositif de l'invention est fixé.

L'antenne 110 est de préférence une antenne de type dipôle imprimé pouvant comporter une ligne d'adaptation telle qu'illustré sur la figure 3. Alternativement, elle peut prendre différentes formes pour exploiter au mieux l'espace disponible, comme une antenne dipôle méandré ou patch.

Le principe de l'invention est de ne permettre l'identification du fonctionnement d'un appareil électrique qu'en présence d'un courant dans le câble d'alimentation. L'information donnée par le passage du courant est prélevée par le détecteur de courant 202. Dans une implémentation préférentielle, telle qu'illustrée sur la figure 3, le détecteur de courant est un système de type bobine de couplage enroulée autour du fil de phase du câble d'alimentation. Le détecteur de courant 202 est couplé à un générateur de tension 204 qui permet de fournir une tension continue en sortie à partir du signal provenant du détecteur de courant.

Un bloc de contrôle 206 couplé à la sortie du générateur de tension permet de commander l'activation de l'antenne 110 et du circuit RFID 208. Le circuit de contrôle comprend des moyens pour produire un changement d'impédance de l'antenne 110 quand la tension continue est appliquée, le changement d'impédance permettant d'émettre les informations d'identification vers le lecteur RFID.

La figure 3 montre une implémentation préférentielle du dispositif 108 de l'invention. Le détecteur de courant 202 est composé d'un transformateur 302 qui permet de récupérer par induction un signal électrique à ses bornes quand un courant circule dans le circuit primaire constitué du fil d'alimentation. Le transformateur 302 permet à l'aide d'un bobinage autour d'une ferrite de récupérer de l'énergie du câble d'alimentation suffisante pour alimenter le circuit électronique RFID 208.

Le signal électrique qui est détecté est redressé et filtré afin de délivrer une tension de commande continue Vs suffisante pour alimenter le circuit de contrôle 206. Le générateur de tension continue 204 est un circuit de type redresseur de tension. Dans une implémentation préférentielle, le générateur de tension continue est un circuit connu dit 'doubleur de Schenkel' comprenant une première capacité 304 couplée à deux diodes Schottky (306, 308), une deuxième capacité 310 connectée en parallèle à une résistance 312.

La tension continue Vs est appliquée en entrée du circuit de contrôle 206. Le circuit de contrôle comprend des composants électroniques utilisés en interrupteurs. Dans une implémentation préférentielle, les composants consistent en une ou plusieurs diodes de commutation rapide 314, de type diodes PIN (Positive Intrinsic Negative), qui sont alimentées par la tension continue Vs. L'homme du métier comprend que des composants supplémentaires peuvent être prévus comme des inductances (316, 318) par exemple, ou des capacités (322, 324) pour éviter des pics de courant dans le circuit RFID 208.

Le circuit intégré du RFID 208 et/ou l'antenne 110 sont reliés à la tension de commande Vs. En l'absence de courant primaire dans le fil du câble d'alimentation, l'antenne 110 n'est pas accordée sur la bonne fréquence utilisée par le standard du lecteur 112 et cela ne permet pas le fonctionnement du circuit intégré. En présence d'un courant primaire dans le fil du câble d'alimentation, la tension Vs atteint une valeur permettant d'alimenter la ou les diodes PIN du circuit de contrôle 206, qui vont mettre l'antenne 110 sur la bonne fréquence de résonance dans le standard considéré en rallongeant sa longueur électrique.

L'antenne devient accordée à la fréquence du signal du lecteur 112 et le circuit intégré du RFID devient fonctionnel. Le signal reçu par l'antenne 110 est de puissance suffisante pour permettre au circuit intégré d'extrait son énergie de fonctionnement. A l'aide de l'énergie récupérée, un signal de réponse est transmit à l'antenne 110 du RFID, qui répond au lecteur 112.

Dans une variante d'implémentation, le circuit de contrôle 206 peut être couplé au circuit RFID de manière à mettre le circuit intégré en court-circuit lorsqu'il n'y a pas de courant détecté, et mettre la puce RFID dans un état de fonctionnement quand un courant est détecté.

Ainsi, la présente description illustre différentes implémentations non limitatives de l'invention. Des exemples ont été décrits pour permettre une bonne compréhension des principes de l'invention, mais ne sont en rien exhaustifs et doivent permettre à l'homme du métier d'apporter des modifications et des variantes d'implémentation en conservant les mêmes principes.

## Revendications

1. Un dispositif de détermination de l'état de fonctionnement d'un appareil électrique et d'identification dudit appareil, le dispositif comprenant :
- un détecteur de courant (202) couplé à un câble d'alimentation de l'appareil électrique, pour détecter le passage d'un courant dans ledit câble et générer un signal électrique ;
- un générateur de tension (204) pour convertir le signal électrique en sortie du détecteur de courant en une tension continue ;
- un circuit RFID (208) permettant de stocker des informations d'identification, couplé à une antenne adaptée pour recevoir de et émettre vers un lecteur RFID des signaux;
le dispositif étant **caractérisé en ce qu'**il comprend un circuit de contrôle (206) couplé au générateur de tension et au circuit RFID, ledit circuit de contrôle comprenant des moyens pour produire un changement d'impédance de l'antenne quand la tension continue est appliquée, le changement d'impédance permettant d'émettre les informations d'identification vers le lecteur RFID.

2. Le dispositif selon la revendication 1 dans lequel le changement d'impédance de l'antenne consiste à amener la fréquence de l'antenne à la fréquence de résonance du lecteur RFID.

3. Le dispositif selon la revendication 1 ou 2 dans lequel le détecteur de courant comprend un transformateur couplé par induction au câble d'alimentation.

4. Le dispositif selon l'une quelconque des revendications 1 à 3 dans lequel le générateur de tension est un circuit de type doubleur de Schenkel.

5. Le dispositif selon l'une quelconque des revendications 1 à 4 dans lequel la fréquence du lecteur RFID est une fréquence de la bande UHF à 868 MHz.

6. Le dispositif selon l'une quelconque des revendications 1 à 5 dans lequel l'antenne est une antenne de type dipôle.

7. Le dispositif selon l'une quelconque des revendications 1 à 6 dans lequel les informations d'identification sont un identifiant de l'appareil électrique.

8. Le dispositif selon l'une quelconque des revendications 1 à 7 dans lequel le circuit de contrôle comprend au moins une diode PIN.

9. Un procédé pour déterminer l'état de fonctionnement d'un appareil électrique et identifier ledit appareil, le procédé comprenant les étapes de :
- détecter le passage d'un courant électrique dans le câble d'alimentation électrique de l'appareil électrique ;
- générer une tension continue représentative du courant électrique ;
- appliquer la tension continue aux bornes d'un dispositif de contrôle, le dispositif de contrôle étant couplé à un circuit RFID permettant de stocker des informations d'identification et étant couplé à une antenne adaptée pour recevoir de et émettre vers un lecteur RFID des signaux, ledit circuit de contrôle permettant de produire un changement d'impédance de l'antenne quand la tension continue est appliquée, le changement d'impédance permettant d'émettre les informations d'identification vers le lecteur RFID.

## Patentansprüche

1. Vorrichtung zur Bestimmung des Betriebszustandes eines elektrischen Gerätes und zur Identifizierung des Gerätes, wobei die Vorrichtung Folgendes beinhaltet:
- einen Stromsensor (202), welcher mit einem Speisekabel des Gerätes gekoppelt ist, um den Durchgang von Strom in dem Kabel zu erkennen und ein elektrisches Signal zu erzeugen;
- einen Spannungsgenerator (204) zum Umwandeln des elektrischen Signals am Ausgang des Sensors in eine Gleichspannung;
- einen RFID-Schaltkreis (208), welcher es ermöglicht, Identifizierungsdaten zu speichern, gekoppelt mit einer Antenne, welche geeignet ist, Signale von einem RFID-Lesegerät zu empfangen und an dieses zu senden;
wobei die Vorrichtung **dadurch gekennzeichnet ist, dass** sie einen Prüfschaltkreis (206) besitzt, welcher mit dem Spannungsgenerator und dem RFID-Schaltkreis gekoppelt ist, wobei der Prüfschaltkreis Mittel zum Erzeugen einer Impedanzänderung der Antenne beinhaltet, wenn die Gleichspannung angelegt wird, wobei die Impedanzänderung es ermöglicht, die Identifizierungsdaten an das RFID-Lesegerät zu senden.

2. Vorrichtung nach Anspruch 1, bei welcher die Impedanzänderung der Antenne darin besteht, die Frequenz der Antenne auf die Resonanzfrequenz des RFID-Lesegerätes zu bringen.

3. Vorrichtung nach Anspruch 1 oder 2, bei welcher der Stromsensor einen Transformator beinhaltet, welcher induktiv mit dem Speisekabel gekoppelt ist.

4. Vorrichtung nach einem der Ansprüche 1 bis 3, bei welcher der Spannungsgenerator ein Schaltkreis vom Typ Schenkel-Verdoppler ist.

5. Vorrichtung nach einem der Ansprüche 1 bis 4, bei welchem die Frequenz des RFID-Lesegerätes eine Frequenz des UKW-Bandes bei 868 MHz ist.

6. Vorrichtung nach einem der Ansprüche 1 bis 5, bei welcher die Antenne eine Antenne vom Typ Dipol ist.

7. Vorrichtung nach einem der Ansprüche 1 bis 6, bei welcher die Identifizierungsdaten eine Kennung des elektrischen Gerätes sind.

8. Vorrichtung nach einem der Ansprüche 1 bis 7, bei welchem der Prüfschaltkreis mindestens eine PIN-Diode beinhaltet.

9. Verfahren zur Bestimmung des Betriebszustandes eines elektrischen Gerätes und zur Identifizierung des Gerätes, wobei das Verfahren folgende Schritte beinhaltet:
- Erkennen des Durchgangs eines elektrischen Stroms im elektrischen Speisekabel des elektrischen Gerätes;
- Erzeugen einer Gleichspannung, welche den elektrischen Strom darstellt;
- Anlegen der Gleichspannung an die Klemmen einer Prüfvorrichtung, wobei die Prüfvorrichtung mit einem RFID-Schaltkreis gekoppelt ist, welcher es ermöglicht, Identifizierungsdaten zu speichern, gekoppelt mit einer Antenne, welche geeignet ist, Signale von einem RFID-Lesegerät zu empfangen und an dieses zu senden, wobei der Prüfschaltkreis es ermöglicht, einer Impedanzänderung der Antenne zu erzeugen, wenn die Gleichspannung angelegt wird, wobei die Impedanzänderung es ermöglicht, die Identifizierungsdaten an das RFID-Lesegerät zu senden.

## Claims

1. A device for determining the state of operation of an electrical appliance and for identifying said appliance, the device comprising:
- a current detector (202) coupled to a power supply cable of the electrical appliance, for detecting the passage of a current in said cable and generating an electrical signal;
- a voltage generator (204) for converting the electrical signal at the output of the current detector into a direct voltage;
- an RFID circuit (208) allowing to store identification information, coupled to an antenna suitable for receiving and transmitting signals from and to an RFID reader;
the device being **characterized in that** it comprises a control circuit (206) coupled to the voltage generator and to the RFID circuit, said control circuit comprising means for producing a change of impedance of the antenna when the direct voltage is applied, the change of impedance allowing to transmit the identification information to the RFID reader.

2. The device as claimed in claim 1, in which the change of impedance of the antenna consists in bringing the frequency of the antenna to the resonance frequency of the RFID reader.

3. The device as claimed in claim 1 or 2, in which the current detector comprises a transformer coupled by induction to the power supply cable.

4. The device as claimed in any one of claims 1 to 3, in which the voltage generator is a circuit of Schenkel doubler type.

5. The device as claimed in any one of claims 1 to 4, in which the frequency of the RFID reader is a UHF band frequency at 868 MHz.

6. The device as claimed in any one of claims 1 to 5, in which the antenna is a dipole-type antenna.

7. The device as claimed in any one of claims 1 to 6, in which the identification information is an identifier of the electrical appliance.

8. The device as claimed in any one of claims 1 to 7, in which the control circuit comprises at least one PIN diode.

9. A method for determining the state of operation of an electrical appliance and identifying said appliance, the method comprising the steps of:
- detecting the passage of an electrical current in the electrical power supply cable of the electrical appliance;
- generating a direct voltage representative of the electrical current;
- applying the direct voltage to the terminals of a control device, the control device being coupled to an RFID circuit allowing to store identification information and being coupled to an antenna suitable for receiving and transmitting signals from and to an RFID reader, said control circuit allowing to produce a change of impedance of the antenna when the direct voltage is applied, the change of impedance allowing to transmit the identification information to the RFID reader.
